## Europäisches Patentamt

## European Patent Office

## Office européen des brevets

(19)

(11) Veröffentlichungsnummer: **0 197 317**
**B1**

(12) # EUROPÄISCHE PATENTSCHRIFT

(45) Veröffentlichungstag der Patentschrift: **08.08.90**

(51) Int. Cl.⁵: **B 60 G 17/00, F 16 F 9/10**

(21) Anmeldenummer: **86103082.3**

(22) Anmeldetag: **07.03.86**

(54) **Vorrichtung zum Steuerung der Federhärte insbesondere bei Federnden Rad-Aufhängungssystemen in Fahrzeugen.**

(30) Priorität: **12.04.85 DE 8510760 u**
**12.07.85 DE 3524863**

(43) Veröffentlichungstag der Anmeldung:
**15.10.86 Patentblatt 86/42**

(45) Bekanntmachung des Hinweises auf die Patenterteilung:
**08.08.90 Patentblatt 90/32**

(84) Benannte Vertragsstaaten:
**DE FR GB IT SE**

(56) Entgegenhaltungen:
EP-A-0 089 794     GB-A-1 450 765
DE-A-2 604 809     US-A-3 861 696
DE-A-2 736 026     US-A-4 491 207
DE-B-1 275 882

PATENT ABSTRACTS OF JAPAN, Band 8, Nr.
120 (M-300)1557r, 6. Juni 1984; & JP - A - 59
26638 (HINO JIDOSHA) 10.02.1984

(73) Patentinhaber: **ROBERT BOSCH GMBH**
**Postfach 50**
**D-7000 Stuttgart 1 (DE)**

(72) Erfinder: **Karnopp, Dean, Prof.**
**1217 Stanford Place**
**Davis, CA 95616 (US)**

Courier Press, Leamington Spa, England.

**Beschreibung**

Stand der technik

Die Erfindung geht aus von einer Vorrichtung nach dem Oberbegriff des Anspruchs 1.

Bekannte Vorrichtungen dieser Art (DE—A—2 604 809; DE—B—1 275 882) vermögen die Federhärte in Abhängigkeit zur Fahrgeschwindigkeit oder sonstiger Parameter dadurch zu verstellen, daß bei einer reinen Luftfederung für Fahrzeuge (DE—B—1 275 882) ein in seinem Volumen veränderbarer Balg als erster Druckraum über einen Durchlaß an weitere, jeweils ein konstantes Volumen aufweisende Druckräume angeschlossen ist. In den Verbindungsleitungen zwischen den Druckräumen kann ein sich durch die Einfederungen selbst steuerndes und bei starker Einfederung eine immer stärkere Drosselung (im Sinne einer Verhärtung der Federung) bewirkendes Ventil vorgesehen sein oder es sind selbsttätig in einer Richtung schließende Ventile vorgesehen, die jedoch nicht auf äußere Last- und Bewegungsparameter durch eine selektive Ansteuerung ansprechen. Es muß daher davon ausgegangen werden, daß die bekannte Luftfederung mit zuschaltbaren weiteren Druckräumen vergleichsweise unspezifisch auf äußere Bedingungen reagiert und bei langsamer Federungsbewegung eine im ganzen weicher reagierende Federhärte vorgibt, die sich bei schneller oder tiefer Einfederung dann zunehmend verhärtet, wodurch offensichtlich die gewünschte progressive Federungscharakteristik auch erzielt wird.

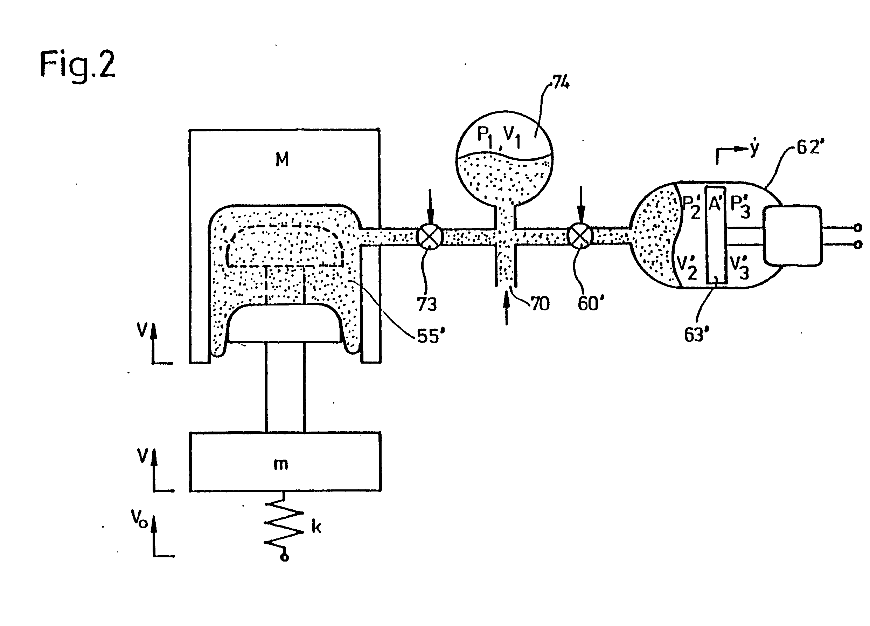

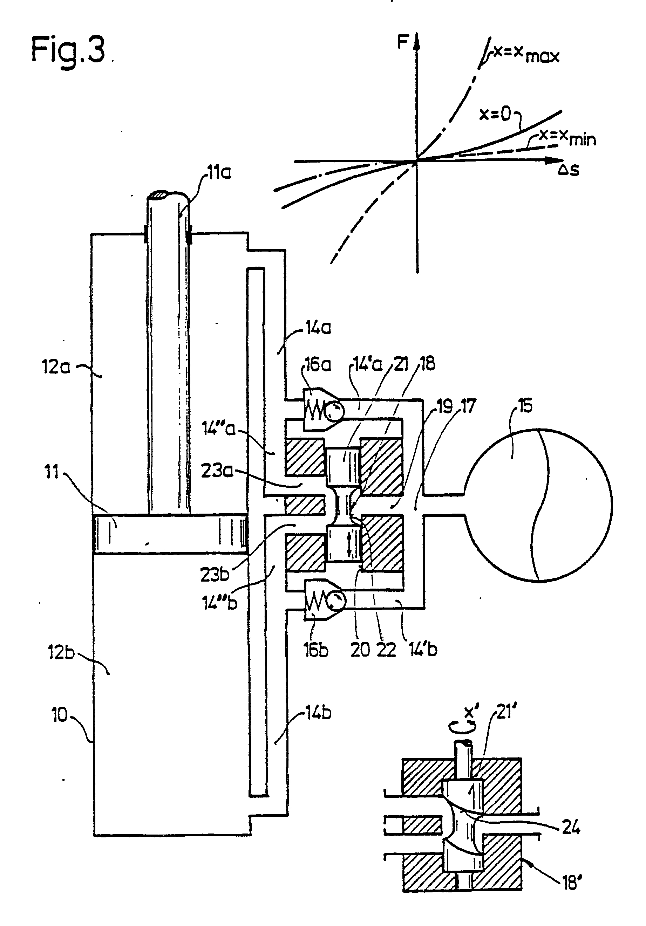

Im Gegensatz hierzu wird bei dem hydropneumatischen oder pneumatischen regelbaren Federelement entsprechenden Gegenstand der DE—A—2 604 809 so vorgegangen, daß sich in Abhängigkeit zu einer auf äußere Parameter reagierenden Ansteuerschaltung eine motorische, durch einen Stellmotor bewirkte Volumenveränderung im zweiten Druckraum ergibt, so daß je nach dem gewünschten Federungsverhalten (weich oder härter) ein dann entsprechend größeres oder kleineres Volumen für den Druckausgleich über eine Verbindungsleitung zur Verfügung gestellt wird. Da sich bei einer Volumenverringerung im zweiten Druckraum überschüssiges Druckmittel ergibt, setzt das bekannte regelbare Federelement eine zusätzliche Niveauregelung zwingend voraus, über die dann Druckmittel abströmen kann, was in Fig. 3 dieser Veröffentlichung gezeigt ist. Im Gegensatz hierzu ist es aus Fig. 2 dieser Veröffentlichung auch schon bekannt, bei einem dann hydropneumatischen regelbaren Federelement die Verbindungsleitung zwischen den beiden, in ihren Volumina dann konstanten Druckräumen über ein Stellglied (Ventil) zu schließen oder zu öffnen, wobei das Stellglied ein Schieber sein kann und seinen Antrieb von einem Stellmotor mit einem Antriebsritzel erfährt, das mit einem Zahnrad kämmt. Das Zahnrad betätigt dann über ein Gewindeteil das Stellglied in Schließ- oder Öffnungsrichtung. Da auch die Volumenveränderung im zweiten Druckraum entsprechend dem weiter vorn erwähnten Ausführungsbeispiel der Fig. 3 nur allmählich über einen solchen Spindeltrieb erfolgen kann, sind insgesamt nur langsame Verstellbewegungen möglich, so daß schnelle Umschaltungen, beispielsweise zur Reaktion auf Notsituationen nicht realisiert werden können und mit einigem Aufwand nur solche adaptiven Anpassungen des Federungssystems in seinem Steifigkeitsverhalten realisiert werden können, wie dies in einfacherer Weise auch durch eine reine, langsam reagierende Niveauregelung möglich wäre.

Schließlich ist es in ählicher Weise wie bei dem Ausführungsbeispiel der Fig. 2 der DE—A—26 04 808 bei der DE—A—27 36 026 schon bekannt, bei einem verstallbaren Radaufhängungssystem für Fahrzeuge zwischen die beiden Druckräume, von denen einer unmittelbar mit der Radbewegung gekoppelt ist, ein schnelles Umschaltventil anzuordnen, welches zur Vermeidung gefährlicher Betriebszustände bei Kraftfahrzeugen (Beeinträchtigung von Laufstabilität oder Steuerbarkeit) die Federgesamtsteifigkeit dadurch verhärtet, daß die Verbindungsleitung zwischen den beiden Druckräumen unterbrochen und bei anders gearteten Betriebszuständen wieder geöffnet wird. Ein solches bekanntes verstellbares Radaufhängungssystem für Fahrzeuge entbehrt jedoch wiederum der Möglichkeit, durch ein adaptives Lernverhalten sich allmählich auf unterschiedliche Betriebszustände des Fahrzeugs einzustellen, denn bei einem Kraftfahrzeug muß im Betrieb erwartet werden, daß es sich für längere Zeit entweder auf ordnungsgemäßen, glatten Straßen fortbewegt, beispielsweise Autobahnen, oder auch auf holprigen Wegen bewegt wird, so daß sowohl eine adaptive Langzeiteinstellung des Federungsverhaltens erforderlich ist als auch eine schnelle Reaktion auf unter Umständen blitzartig einwirkende Betriebszustände wie Seitenwind nach Brückendurchfahrten u. dgl. oder schnelle Kurvenfahrt, wobei bei diesen letzteren Fahrzuständen eine sofortige Verhärtung des Federungssystems erforderlich ist.

Keine der bekannten Federungssysteme ist aber in der Lage, allen diesen Anforderungen gerecht zu werden.

Allgemein sind ferner noch Mittel zum Steuern der Federhärte bekannt (DE—C—16 30 058), wobei zwei Arbeitskammern eines Stoßdämpfers oder auch Federbeins über außenliegende Leitungen an eine Einrichtung angeschlossen sind, die aus einer Pumpe und zwei Speichern besteht. In den Verbindungsleitungen zu dem Federbein sind als Ventile lediglich einfach wirkende Rückschlagventile vorgesehen. Mit einer solchen Vorrichtung ist dann aber die Dämpferhärte eines solchen Stoßdämpfers nicht zu verädern, denn hierfür muß von außen—über die Pumpe—Energie zugeführt werden, was verhältnismäßig langsam erfolgt und einen gewissen Leistungsbedarf bedeutet. Die Steuerung der Dämpferhärte bei einem Stoßdämper ist ferner bekannt aus der DE—A—33 04 815.

Federungssysteme heute gebräuchlicher Fahrzeugtypen, insbesondere Personenfahrzeuge werden üblicherweise bezüglich der Federhärte und der Dämpferhärte auf einen mittleren Betriebsfall optimiert, wobei Parameter konstruktiv festgelegt werden und, abgesehen von Alterungserscheinungen, im Fahrbetrieb dann unverändert bleiben. Da dies bei extremen Betriebsfällen, beispielsweise bei leerem Fahrzeug oder voll beladenem Fahrzeug oder bei sich ändernden Bewegungsparametern des Fahrzeugs (schnelle Kurvenfahrt, Bremsen, Beschleunigen, komfortable Autobahnfahrt u. dgl.) nicht bei allen solchen Betriebszuständen eine optimale Federung oder Dämpfung des Federungssystems ergibt, ist es auch schon bekannt, zwischen mehreren Dämpfereinstellungen oder Federsteifigkeiten umzuschalten. Hierdurch ist aber eine Langzeitanpassung des Federungssystems (und gegebenenfalls des Dämpfersystems, auch in das Federungssystem in beliebiger Weise integriert oder Bestandteil desselben) nicht möglich und vor allen Dingen ist eine selbständige Einstellung auf verschiedene Fahrbahnzustände oder Fahrweisen in feiner Anpassung nicht möglich, da lediglich stufig zwischen üblicherweise nur zwei Betriebszuständen in den Kennlinien der Feder- und/oder Dämpfungssysteme umgeschaltet werden kann.

Bekannt ist ferner (US—A—3 807 678) bei einem Aufhängesystem zweier Massen, wobei es sich bei der einen Masse um ein oder mehrere Räder eines Fahrzeugs und bei der anderen Masse um den Fahrzeugaufbau handeln kann, zwischen beiden eine passive normale Druckfeder anzuordnen, die als passives Trennglied bezeichnet ist und der ein sogenannter aktiver Dämpfer parallelgeschaltet ist. Für aktiv wird dieser Dämpfer, bei welchem in einem Zylinder ein diesen in zwei Arbeitskammern unterteilender Kolben gleitet, deshalb gehalten, weil in die Dämpfungseigenschaften, also in die Voluminaverdränungen des Druckmittels in den jeweiligen Arbeitshälften des Dämpfers durch Steuerung sozusagen aktiv eingegriffen wird. Zu diesem Zweck sind die beiden Arbeitskammern jeweils zueinander überkreuz und parallel miteinander über entgegengesetzt gerichtete, einen Fluß des Druckmittels ausschließlich in einer Richtung zulassende Ventile geschaltet, wobei dann die von diesen Ventilen jeweils durchgelassene Druckmittelmenge noch "aktiv" durch entsprechende Ansteuerung der Ventile mittels geeignet aufbereiteter Sensorsignale bestimmt wird. Da bei diesem bekannten Federungssystem die Feder selbst völlig passiv, der Dämpfer in seinen Eigenschaften als aktiv aufgefaßt worden ist, wird in dieser Veröffentlichung das Gesamtsystem als halbaktiv oder semiaktiv bezeichnet. Diese Bezeichnung steht aber nicht in einer sinnvollen Beziehung zu den die vorliegende Erfindung betreffenden Dämpfern, die ohne Bezugnahme auf nicht berücksichtigte Federsysteme selbst als sogenannte semiaktive Dämpfer bezeichnet sind, aus Gründen, auf die weiter unten noch eingegangen wird.

Es ist ferner bekannt, bei Radaufhängungen in Fahrzeugen sogenannten aktive Dämpfermittel vorzusehen (siehe Aufsatz "Active Damping in Road Vehicle Suspension Systems", veröffentlicht in der Zeitschrift "Vehicle System Dynamics", 12 (1983), Seiten 291—316). Auf diese Veröffentlichung wird im übrigen auch deshalb verwiesen, weil grundlegende Überlegungen auch in theoretisch ausführlicher Form insbesondere für aktive Dämpfungseigenschaften, dort aufgeführt sind.

Der Erfindung liegt daher die Aufgabe zugrunde, eine Gesamtkonzeption für ein Federungssystem, gegebenenfalls mit separaten oder integrierten Dämpfungsmitteln, zu schaffen, welches einerseits durch Adaption, also ein Lernverhalten an jeweilige Bewegungsabläufe, beispielsweise Fahrbahnzustände u. dgl. eine selbsttätige Anpassung findet, andererseits aber in der Lage ist, dann, wenn es erforderlich ist, auch sofort auf eine entsprechende andere Federsteifigkeit, etwa Verhärtung bei unerwarteter schneller Kurvenfahrt, umzuschalten.

Vorteile der Erfindung

Die erfindungsgemäße Vorrichtung löst diese Aufgabe mit den kennzeichnenden Merkmalen des Hauptanspruchs und hat den Vorteil, daß bei besonders einfachem Aufbau durch die sich ergebenden Möglichkeiten einer variablen Steifigkeit in Verbindung mit einer variablen Dämpfung sowie gegebenenfalls einer schnellen Niveauregelung, die in das System integriert sein kann, sowohl eine langsame, kontinuierliche adaptive Anpassung des Federungssystems in seinem Steifigkeitsverhalten möglich ist, als auch schnelle Umschaltungen auf beispielsweise höhere Steifigkeiten in Notsituationen sofort realisiert werden können. Dabei wird insgesamt nur sehr wenig von außen heranzuführende Energie benötigt, die ausschließlich Steuerungsenergie ist, also nicht dafür verwendet werden muß, etwa betriebsabhängig durch Zuführung von Druckmittel bestimmte Rückfedereigenschaften sicherzustellen, mit Ausnahme einer wahlweise der Gesamtfederkonzeption zuordnungsfähigen Niveauregeleinrichtung.

Durch die in den Unteransprüchen aufgeführten Maßnahmen sind vorteilhafte Weiterbildungen und Verbesserungen der Erfindung möglich. Besonders vorteilhaft ist eine das erfindungsgemäße Federungskonzept ergänzende, variable unsymmetrische Dämpferausbildung, die quasi so wirkt, als wenn der Dämper mindestens angenähert ein aktives Dämpferverhalten einschließt.

Vorteilhaft ist ferner die Möglichkeit, dem Federungskonzept eine auch schnell reagierende Niveauregelung zuordnen zu können.

Zeichnung

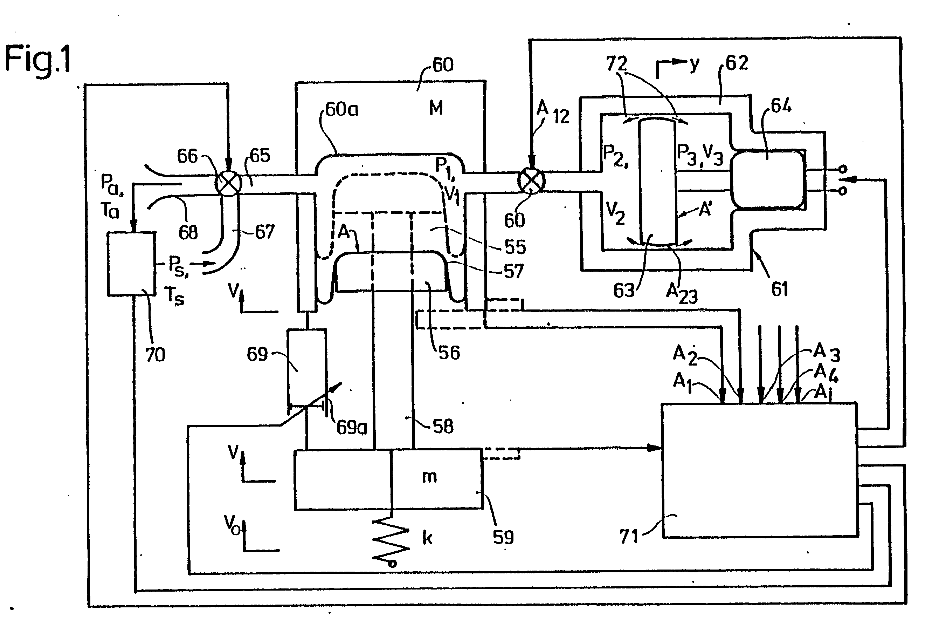

Mehrere Ausführungsbeispiele der Erfindung sind in der Zeichnung dargestellt und werden in der nachfolgenden Beschreibung näher erläutert. Es zeigen Fig. 1 eine erste Ausführungsform eines Gesamtaufhängungskonzepts mit Luftfederung in sogenannter semi-aktiver Form, wahlweise mit Zuordnung ebenfalls variabler oder semi-aktiver oder aktivierter Dämpfungsmittel, Fig. 2 ein der Darstellung der Fig. 1 ähnliches System als hydropneumatische Ausführungsform und die Fig. 3 bis 7 mögliche Ausführungsformen variabler, sogenannter semi-aktiver Dämpfer.

Beschreibung der Ausführungsbeispiele

Die in Fig. 1 gezeigte Gesamtfederungskonzeption umfaßt ein federnd und dämpfend ausgehängtes Zwei-Massen-Modell, bei welchem, angewendet auf ein Fahrzeug, mit k die Reifenfederfähigkeit, mit m ein Rad, mit den Elementen 55, 56, 57, 58 eine Feder zwischen den beiden Massen, mit M der Fahrzeugaufbau und mit 69 ein mögliches, die beiden Massem M und m verbindendes Dämpfungsmittel vorgesehen ist. Dabei ist mit $v_0$ die Straßeneingangsgeschwindigkeit, mit v die Radgeschwindigkeit und mit V die Körpergeschwindigkeit, also hier die Absolutgeschwindigkeit des Kraftfahrzeugaufbaus bezeichnet, während die Differenz zwischen Radgeschwindigkeit und Aufbaugeschwindigkeit die Relativgeschwindigkeit zwischen beiden angibt, also $v - V = V_{rel}$.

Die Fig. 1 zeigt, zum Teil stark schematisiert, ein sogenanntes semiaktives Luftfederungssystem, wobei selbstverständlich auch jedes andere geeignete gasförmige Medium als Druckmittel verwendet werden kann. Ein an der Aufbaumasse 60 angeordneter Zylinder oder Druckmittelbehälter 60a bildet einen Druckraum 55 (Druck $P_1$, Volumen $V_1$), dessen Volumen sich relativ zur Bewegung eines kolbenähnlichen Elements je nach der gegenseitigen Relativgeschwindigkeit verändert; hierzu ist ein über eine Kolbenstange 58 von der Radmasse 59 angetriebener Kolben oder Kolbenteller 56 vorgesehen, der über einen den Druckraum 55 abdichtenden Trennbalg 57 mehr oder weniger stark in den Zylinderbereich eintaucht; hierbei rollt der Trennbalg 57 im Wandbereich ab, wobei eine innere Position gestrichelt dargestellt ist. Der Druckraum 55 ist über ein erstes, die Federungseigenschaften des Aufhängungssystems bestimmendes Umschaltventil 60 mit einem weiteren, ebenfalls die Federungseigenschaften des Aufhängungssystems bestimmenden Mechanismus 61 verbunden, der einer optimierenden Feineinstellung der Federhärte oder Federsteifigkeit dient, während das Umschaltventil 60 abrupt zwischen in diesem Falle zwei verschiedenen Federsteifigkeiten umschaltet.

Der Mechanismus 61 ist so ausgebildet, daß er ein weiteres variables Druckmitelvolumen dem Druckraum 55 über das Umschaltventil 60 zur Verfügung stellt und ist im einzelnen so ausgebildet, daß in einer Zylindereinrichtung 62 ein Stellkolben 63 angeordnet ist, der durch einen gesteuerten Antrieb von außen, also über ein Stellglied 64 im Zylinder wie üblich eine axiale Verstellung erfährt. Der Stellantrieb 64 ist dabei so ausgebildet, daß er dann, wenn er nicht angesteuert ist, die Kolbenposition blockiet—mit anderen Worten, ist eine vorgegebene Feineinstellung des für bestimmte Last- und Bewegungsparameter optimalen Druckmittelvolumens erreicht, dann wird diese Position ohne weitere Energiezufuhr beibehalten, bis sich eine weitere Änderung ergibt. Zu diesem Zweck ist der Stellantrieb 64 selbsthemmend ausgebildet; er kann daher die Verstellung des Kolbens 63 axial im Zylinder 62 beispielsweise über einen Schnekentrieb o. dgl. mit Selbsthemmung durchführen.

Auf der anderen Seite mit dem Druckraum 55 über ein weiteres Umschaltventil 66 verbunden ist eine Niveauregelung 70 vorgesehen, die entweder über das Umschaltventil 66 dem Druckraum 55 über eine Zweigleitung 67 Druckmittel zuführt oder über die Ablaßleitung 68 Druckmittel entnimmt. Der Aufbau vervollständigt sich dann noch durch die Anordnung von zunächst beliebig auszubildender Dämpfermittel 69, die aber vorzugsweise, wie durch den Pfeil 69a angedeutet, Dämpfer mit variablen oder semi-aktiven, gegebenenfalls auch mit aktiven Verhalten sein können; bevorzugte Ausführungsformen solcher Dämpfer werden weiter unten noch anhand der Darstellung der Fig. 3 bis 7 erläutert.

Die Umschaltungen der Ventile 60 und 66, die Verstellung des Kolbens 63 und die gegebenenfalls noch mögliche asymmetrische Verstellung von Dämpferkennlinien des oder der Dämpfer 69 erfolgen dann in Abhängigkeit zu bestimmten Signalen, die in an sich beliebiger Weise gewonnen und verarbeitet werden können und die im wesentlichen aus Last- und Bewegungsparametern des Fahrzeugs herrühren, wobei solche Signale durch geeignete Sensoren in geeigneter Ausbildung und an geeigneter Stelle erfaßt und einer zentralen Steuereinheit 71 zugeführt werden, die vorzugsweise auch ein Mikroprozessor, Einzweckrechner, Prozeßrechner o. dgl. sein kann. Mögliche Last-, Betriebs- und Bewegungsparameter können beispielsweise sein Relativgeschwindigkeit der beiden Körper m und M (Rad 59 und Fahrzeugaufbau 60), Absolutgeschwindigkeit der beiden Körper, beides in der vertikalen Ebene, Kurvenfahrt, Beschleunigung und Bremsung, Belastung, Geschwindigkeit des Aufbaus in der Horizontalebene, Signal in Abhängigkeit zur gemessenen Fahrzeug-Querbeschleunigung oder -Querneigung (Wankverhalten), Signal in Abhängkeit zur Vorder- und Hinterachsbeeinflussung, bezogen auf Fahrzeugverzögerungen bzw. Beschleunigungen (Nick-Verhalten), Signal in Abhängigkeit zum Beladungszustand (Niveauregelung), Signal in Abhängigkeit zum Straßenzustand, wobei hier noch beliebige Signale beliebiger Art einbezogen werden können; die Gewinnung solcher Signale ist für den Fachmann unter Verwendung geeigneter Sensoren möglich, wobei Beschleunigungsmesser, Sensoren zur Bestimmung relativer Verschiebewege und durch geeignete Integration auch -geschwindigkeiten u. dgl. gewonnen werden können.

Sämtliche dieser Signale gelangen auf die Eingänge A1, A2, A3, A4 ... Ai, werden in der zentralen Steuerschaltung 71 verarbeitet und ergeben die jeweils gewünschte Wirkungsweise bei vorliegender Erfindung, die im wesentlichen wie folgt abläuft. Bei dem in Fig. 1 dargestellten semi-aktiven Luftfederungssystem bewirkt eine Positionsveränderung des Kolbens 63 eine auch kontinuierliche Variation der Federsteifigkeit und damit die Möglichkeit, eine Feinoptimierung vorzunehmen. So kann beispielsweise eine langsame Kolbenverstellung im Bereich der Einrichtung 61 die Federsteifigkeit des Aufhängungssystems auf die Straßenbeschaffenheit, also störungsfreie Schnellstraße oder mit Schlaglöchern versehene Landstraße o. dgl., sowie auf die Fahrzeuggeschwindigkeit abstimmen, wobei sich letztendlich eine bestimmte Endposition des Kolbens 63 ergibt, wodurch ein vorgegebenes federndes Druckmittelvolumen dem Druckraum 55 zugeordnet ist, welches die Federsteifigkeit zu dieser Zeit bestimmt.

Dabei ist es ein bevorzugtes Merkmal vorliegender Erfindung, daß der Kolben 63 gegenüber den beiden von ihm gebildeten Volumenkammern nicht abgedichtet ist, sondern eine bestimmte Leckage A23, wie auch die Pfeile 72 angeben, um den Kolben möglich ist, wodurch sich ein statischer Druckausgleich ergibt mit dem weiteren Vorteil, daß auch bei einer Kolbenverstellung nicht übermäßig Energie aufgewendet zu werden braucht, da der Kolben 63 nicht gegen den vollen Druck arbeiten muß, sondern ein Druckausgleich gleichzeitig stattfinden kann. Ein weiteres wesentliches und bevorzugtes Merkmal bei diesem Feinoptimierungs-Mechanismus 61 besteht darin, daß das Stellglied 64 selbsthemmend ausgelegt ist, d.h. der Kolben behält auch bei von der zentralen Steuereinrichtung 71 weggenommenen Eingangssignal seine Stellung bei und verschiebt sich erste wieder, wenn beispielsweise unterschiedliche Absolutgeschwindigkeiten in der horizontalen Ebene und/oder andere Fahrbahnbeschaffenheiten sich ergeben, wodurch eine hier als Langzeit-Federsteifigkeitsverhalten bezeichnete Federhärte einer möglichen Änderung bedarf.

Andererseits ermöglicht die Erfindung durch die Anordnung eines schnellen Umschaltventils 60 eine sofortige Verhärtung der Federsteifigkeit des gesamten Aufhängungssystems dann, wenn Fahrbedingungen oder Fahrmanöver vorliegen, die sich besser mit einer Aufhängung hoher Federsteifigkeit bewältigen lassen, beispielsweise schnelle Kurvenfahrt, unmittelbare Bremsmanöver oder sonstige "Not"-Situationen.

In ähnlicher Weise gelingt er vorliegender Erfindung, steife Aufbaubewegungen wie Roll- oder Nickschwingungen durch Umschalten in der Federsteifigkeit über das Ventil 60 aufzufangen, wobei es aber ergänzend möglich ist, gerade solche Bewegungen auch durch die Niverauregelung 70 auszuregeln, wenn man bereit ist, in diesem Bereich mit einiger Energiezufuhr zu arbeiten. Es ist dann möglich, die Arbeitsgeschwindigkeit der Niveauregelung anzuheben, so daß diese in der Lage ist, auch im Frequenzbereich von beispielsweise 1,0 Hz auf Aufbaubewegungen zu reagieren, wodurch Roll- und Nickbewegungen aufgefangen werden können; dies steht im Gegensatz zu üblichen Niveauregelungen, deren Reaktionszeit etwa im Bereich von weniger als 0,1 Hz liegt. Eine solche Niveauregelung kann dann bevorzugt das schnelle Umschaltventil 66 aufweisen, welches beispielsweise bei Anstieg des Bremsdrucks oder einer seitlich einwirkenden Beschleunigung anspricht und von dieser Seite eine größere Federhärte vermittelt. In diesem Zusammenhang kann ein stabilisierter Regelungsablauf der Niveauregelung 70 dadurch erzielt werden, daß man dieser noch weitere Signale zuführt oder jedenfalls über die zentrale Steuerlogik 71 so ansteuert, daß zusätzlich zu Veränderungen im Belastungszustand auch noch mindestens einige der weiter vorn schon erwähnten Betriebs- und Bewegungsparameter-Signale verarbeitet werden. Dabei läßt sich der Energieverbrauch der Niveauregelung dann reduzieren, wenn das System immer dann auf maximale Federsteifigkeit geschaltet wird, wenn die Niveauregelung in ihrer Geschwindigkeit angehoben wird. Auf diese Weise läßt sich auch das Aufhängungssystem insgesamt an anderer Stelle vereinfachen, so daß beispielsweise mechanische, eine Nickbewegung dämpfende Querstangen entfallen können.

Zu diesen bisher geschilderten Möglichkeiten können dann noch die im folgenden umfassend erläuterten Ausbildungsformen semi-aktiver Dämpfer kommen, die in Fig. 1 stellvertretend für alle mit dem Bezugszeichen 69 angegeben sind. Der Hauptgedanke hierbei besteht darin, Aufbaubewegungen als Funktion der absoluten Geschwindigkeit und der relativen Aufbau-Radgeschwindigkeit ohne Energiezufuhr (abgesehen von einer erforderlichen Ventil-Steuerenergie) so zu dämpfen, daß sich eine Art halbaktiver Dämpfer ergibt.

Wird andererseits anstelle des in Fig. 1 gezeigten Luftfedersystems ein hydropneumatisches semi-aktives System entsprechend Fig. 2 verwendet, dann kann ein separater Dämpfer völlig entfallen, da in diesem Fall die Möglichkeit besteht, ein ergänzend noch vorgesehenes Dämpfungs-Regelventil 73 unmittelbar in die Anschlußleitung zur Druckkammer 55' anzuordnen, welches dann so ausgebildet und so gesteuert sein kann, wie dies mit Bezug auf die verschiedenen Dämpferventile der Fig. 3 bis 7, auch der Funktion nach erläutert ist. Durch den Übergang auf ein hydropneumatisches semi-aktives System entsprechend Fig. 2 ist es erforderlich, noch zusätzlich einen Druckausgleichsbehälter 74 vorzusehen, der teilweise mit einem gasförmigen, die erforderlichen Federungseigenschaften zur Verfügung stellenden Medium (Druck P1, Volumen V1) gefüllt ist; der Niveauregler greift dann bei 70' an einer dem Dämpferregelventil 73 nachgeschalteten Verzweigungsleitung an. Erst dann schließt sich das weiter vorn schon erwähnte schnelle Umschaltventil 60' an, welches bei Betätigung sofort höhere Steifigkeiten des Federungssystems vermittelt; auch die Zylindereinrichtung 62' ist in einen gasgefüllten Bereich unterteilt, der auch den Kolben 63' mit gleicher Wirkung wie weiter vorn geschildert, enthält und in den das hydraulische Medium enthaltenden vorderen Teilbereich.

Bei diesem in Fig. 2 gezeigten hydropneumatischen System übernimmt das Dämpferregelsystem 73 die Dämpfungsaufgabe, die in Fig. 1 vom Dämpfer 69 wahrgenommen werden; bevorzugt ist dieses Dämpferregelventil 73 dann so ausgebildet, wie dies im folgenden bei der Erläuterung der Fig. 3 bis 7 mit Bezug auf das bei diesen Dämpferausführungsformen jeweils vorgesehene asymmetrische Dämpferventil angegeben ist, gegebenenfalls auch noch mit weiteren, zugeordneten und in nicht dargestellten Parallelleitungen angeordneten Rückschlagventilen.

Bei den im folgenden als vorteilhafte Ausgestaltungen der Erfindung noch erläuterten verschiedenen Dämpfer-Ausführungsformen ist im Prinzip ein passives System vorgesehen, welches durch ein asymmetrische Dämpferventil (vorzugsweise in Verbindung mit Rückschlagventilen) so gesteuert werden kann, daß immer kann, wenn die aktive Dämpferkraft ein Vorzeichen aufweist, welches zu dem, welches passiv erzeugt werden kann, entgegengesetzt ist, die semi-aktive Ausführungsform eines Dämpfers im wesentlichen abgeschaltet wird, so daß jedenfalls keine Dämpferkraft entwickelt wird, die der eigentlich zu diesem Zeitpunkt für ein wirksamere Dämpfung gewünschten (aktiven) Dämpferkraft entgegengesetzt ist. Untersuchungen haben erwiesen, daß im praktischen System eine auf diese Weise vereinfachte Dämpferausbildung erhebliche Vorteile aufweist, die sich besonders günstig in Verbindung mit den in den Fig. 1 und 2 erläterten Gesamtkonzepten eines Aufhängungssystems kombinieren lassen.

Entsprechend den weiter vorn angegebenen Erläuterungen erfolgt die Dämpfungskraftsteuerung durch Auswerten vorzugsweise der Geschwindigkeitsangaben V, also beim Anwendungsbeispiel auf Kraftfahrzeugaufhängungen die Absolutgeschwindigkeit des Aufbaus, die meßtechnisch in geeignter Weise erfaßt werden kann, beispielsweise durch Beschleunigungsaufnehmer und nachfolgende Integration, und der Relativgeschwindigkeit $V_{rel}$ zwischen Aufbau und Rad, die ebenfalls in geeigneter Weise gemessen werden kann, beispielsweise dadurch, daß man, wie für sich gesehen bekannt, die Signale von Positionsdetektoren an Rad und Aufbau oder den Verschiebweg der Dämpferbewegung oder ähnliches erfaßt. Im folgenden werden solche Maßnahmen zur Gewinnung von Sensorsignalen als für sich gesehen bekannt vorausgesetzt (sie sind im übrigen auch in der weiter vorn schon erwähnten US—PS 3 807 678 erwähnt), desgleichen wird nicht genauer auf die spezielle Art der Bewegungen der jeweiligen Ventilglieder bei den nachfolgend beschriebenen semi-aktiven Dämpfern eingegangen, da solche Bewegungen aus den ermittelten Signalen in üblicher Weise, etwa durch Magnete, elektromagnetische Einwirkungen allgemein, motorische Steuerung u. dgl. abgeleitet werden können. Alle nachfolgend beschriebenen Ausführungsformen von semiaktiven Dämpfern haben gemeinsam die Anordnung von mindestens einem (ungesteuerten) Rückschlagventil sowie eines sogenannten Hauptventils mit variabel asymmetrischen Dämpfungscharakter, wobei von besonderer Bedeutung die asymmetrische Wirkung dieses Ventils in Verbindung mit Rückschlagventilen zur Realisierung der weiter vorn im einzelnen angegebenen Dämpfungskraftverläufe ist.

Der in Fig. 3 gezeigte semiaktive Stoßdämpfer kann zwischen einer (nicht dargestellten) Fahrzeugachse und einem (nicht dargestellten) Fahrzeugaufbau angeordnet sein und besteht im grundsätzlichen Aufbau stets aus einer Zylindereinheit 10 und einem in dieser gleitenden Kolben 11, wobei zwei Arbeitskammern 12a und 12b gebildet sind, die durch den Kolben getrennt und beim Arbeiten des Dämpfers in ihren Volumina selbstverständlich variabel sind. Der Kolben ist von einer Kolbenstange 11a getragen, die beispielsweise am Fahrzeugaufbau befestigt sein kann, dann ist der Zylinder 10 an der Fahrzeugachse angeordnet. Die beiden Arbeitskammern 12a und 12b sind über jeweils eine Leitung 14a, 14b, die sich wieder in Zweigleitungen 14a' und 14a'' sowie 14b' und 14b'' aufteilen, mit einem beispielsweise hydropneumatischen Speicher 15 verbunden (nämlich über die Zweigleitungen 14a' und 14b'), wobei in diesen Zweigleitungen auch jeweils Rückschlagventile 16a, 16b liegen, die als federvorgespannte Kugelventile ausgebildet sind und bei einem Druckmittelfluß oder Fluidumsfluß aus der jeweils zugeordneten Arbeitskammer heraus (beispielsweise zum Speicher) sperren.

Vor dem Speicher vereinigen sich die beiden Zweigleitungen 14a', 14b' bei 17; die beiden anderen Zweigleitungen 14a'' und 14b'' bilden Eingangs- oder Ausgangs-Druckleitungen zu einem variablen asymmetrischen Dämpfungsventil 18, welches über den Verbindungspunkt 17 mit einer weiteren Leitung 19 ebenfalls mit dem Speicher 15 bzw. den beiden anderen Zweigleitungen 14a', 14b' verbunden wird.

Bei dem in Fig. 3 dargestellten Ausführungsbeispiel besteht das asymmetrische Dämpferventil aus einem in einer zylindrischen Bohrung 20 axial gleitverschieblich gelagerten Ventilglied 21 von ebenfalls im wesentlichen zylindrischer Form, jedoch mit einer mittleren Einschnürung 22, die zu den angrenzenden Gleitflächen beispielsweise kegelstumpfförmig sich vergrößernd übergeht. Die beiden mit den Zweigleitungen 14a'' und 14b'' verbundenen Ventilanschlüsse 23a und 23b auf der gleichen Seite sind in der Ventilglied-Stellbewegung höhenversetzt; der andere Ventilanschluß 19 ist zentral angeordnet.

Daher ist die Funktion des in Fig. 3 gezeigten Dämpfers so, daß bei einer beliebigen Position des Ventilglieds 21 in der einen Richtung, beispielsweise wenn bei Auftreffen auf ein Hindernis der Stoßdämpfer zusammengedrückt wird, über die Zweigleitung 14b'' Druckmittel über das Ventil mit vorgegeben angenommenem Ventilwiderstand und daher entsprechendem Dämpfungswiderstand in die Leitung 19 und von dieser über das Rückschlagventil 16a zur anderen Arbeitskammer fließen kann, was einer angenommenen positiven Dämpfungskraft engsprechen soll. Ist sofort darauffolgend (Δŝ<o) eine dann nur minimale negative Dämpfungskraft erforderlich, dann ermöglicht das Rückschlagventil 16b in diesem Fall das schnelle Auseinanderziehen des Kolben-Zylinderaggregats, da in diesem Fall das Druckmittel aus der in der Zeichenebene oberen Arbeitskammer 12a über das wegen seiner Asymmetrie in diesem Falle und in der beibehaltenen Position praktisch widerstandsfreie Dämpferventil 18 und über das Rückschlagventil 16b in die andere Kammer fließen kann. Durch die Verschiebbarkeit des Ventilglieds 21 ergibt sich dann die variable asymmetrische Dämpfungsmöglichkeit. Ein solcher semiaktiver Dämpfer ist daher in der Lage, die im kleinen Diagramm rechts oben über der Geschwindigkeit aufgetragenen (nichtlinearen) Dämpfungskraftverläufe zu erzeugen, wobei jeweils Kurven gleicher Form, also durchgezogen, gestrichelt oder mit großem Abstand gestrichelt, zusammengehören. Befindet sich das Ventilglied beispielsweise symmetrisch in der Mitte der Anschlußposition (x=o), dann ergeben sich für beide Geschwindigkeitsrichtungen gleiche Dämpferkräfte; bei den jeweiligen Anschlagpositionen des Ventilglieds (x=x$_{max}$; x=x$_{min}$) ergeben sich stark unsymmetrisch oder nichtlinear verlaufende Dämpferkräfte für die eine und die andere Geschwindigkeitsrichtung.

Es versteht sich, daß das variabel asymmetrische Dämpferventil 18 einer Vielzahl von Variationen zugänglich ist; so kann beispielsweise das Ventilglied 21' auch so wie beim Dämpferventil 18' in der rechten unteren Ecke der Zeichnung der Fig. 3 angegeben ausgebildet sein; die Stellbewegung ist dann eine Drehung x', und man erkennt durch die beidseitig in gleicher Richtung schräg verlaufenden Übergangsflächen 24, daß das Ventil asymmetrisches Verhalten gewährleistet, was im Grunde bedeutet, daß die beiden Ventilanschlüsse 23a, 23b zum Anschluß 19 auf der anderen Seite bei einer vorgegebenen Ventilgliedposition einen unterschiedlichen Flußwiderstand erfahren, allgemein gesagt also das Ventil für die beiden Anschlüsse 23a, 23b in jeder Position (mit Ausnahme der Mittenposition) unterschiedliche Öffnungsquerschnitte aufweist.

Bei der Erläuterung der nachfolgenden Ausführungsformen wird zunächst darauf hin gewiesen, daß nur auf solche Merkmale eingegangen wird, die sich als unterscheidlich zu der mit Bezug auf Fig. 3 beschriebenen Grundkonzeption unterscheiden; grundsätzlich gilt für alle Ausführungsformen, daß die Dämpferventile so ausgelegt sind, daß sie eine eingebaute Asymmetrie mit Bezug auf die relative Geschwindigkeit aufweisen. Ergeht dann an das Dämpferventil der Befehl, beispielsweise eine Zugkraft (Zug und Druck sind hier mit Bezug auf die von außen auf den Dämpfer einwirkenden Möglichkeiten bezogen), dann erzeugt das Ventil automatisch nur eine sehr geringe Druckkraft, selbst dann, wenn die relative Geschwindigkeit in der Druckrichtung verläuft. Ist ein solches Verhalten direkt in das Ventil eingebaut, dann sind die Anforderungen bezüglich des Frequenz-Ansprechverhaltens an das Ventil geringer und auch der Regler oder die elektrische Steuerschaltung kann vereinfacht werden.

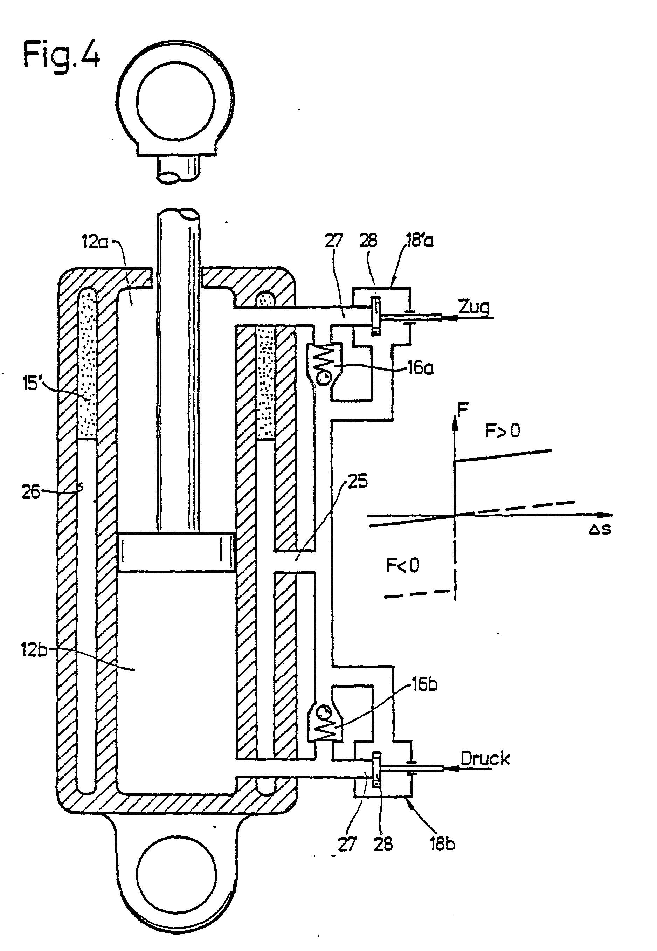

Mit Ausnahme des Ausführungsbeispiels der Fig. 4, bei welchem die Ventilkraft mehr oder weniger direkt gesteuert ist, wird bei den anderen Ausführungsbeispielen der Ventilwiderstand durch die Ventilposition bestimmt. Im einfachsten Fall können die Dämpfer oder Steuerventile einfach als Folge des zugeführten Signals umgeschaltet werden, wobei das Signal beispielsweise das Meßergebnis der absoluten Aufbaugeschwindigkeit sein kann. Kontinuierliche Veränderungen des Ventilwiderstandes oder der erzeugten Dämpferkraft sind durch Kraftrückführungs-Schaltungen möglich. Dabei ist es ein wesentliches Merkmal der erläuterten Ausführungsbeispiele, daß in Verbindung mit dem grundlegenden Ventilmechanismus, also mit dem Dämpferventil, jeweils Rückschlagventile vorgesehen sind, so daß der Ventilbereich allgemein so intelligent wie möglich gemacht werden kann. Dabei sei erwähnt, daß ein bestimmter, wenn auch geringer passiver Dämpfungsbeitrag (beispielsweise eine Kraftkomponente proportional zu oder als Funktion der relativen Geschwindigkeit) stets erforderlich ist, und zwar aufgrund der geringen Dämpfungseigenschaften der ungefederten Masse auf die "Reifenfeder". Es ist daher nicht notwendig, daß die Dämpferventile insoweit absolut "perfekt" arbeiten; tatsächlich sollten die Dämpferventile mechanisch durch Anschläge begrenzt sein, so daß das Dämpfungsgesetzt nicht zu weitgehend variiert werden kann, was sonst möglicherweise einen gefährlichen Zustand im Falle eines Ausfalls der Steuerungseinrichtung oder bei Störungen im Ventil selbst, bedeuten könnte.

Bei dem Ausführungsbeispiel der Fig. 4 sind die beiden Arbeitskammern, die auch hier wieder mit 12a und 12b bezeichnet werden, wiederum direkt über die beiden Rückschlagventile 16a, 16b miteinander und mit einem hydrophenumatischen Speicher über eine Querleitung 25 verbunden, wobei dieser Ausgleichsspeicher in eine Ringausnehmung 26 des Zylinders selbst verlegt und mit 15' bezeichnet ist. Parallel zu den jeweiligen Rückschlagventilen 16a, 16b sind, wie auch beim Ausführungsbeispiel der Fig. 3 dann hier geteilte Bereiche 18a', 18b' des Dämpferventils angeordnet, die jeweils ein Tellerventil darstellen, bei denen also der Ventileinlaß oder -auslaß 27 durch beispielsweise direkt elektromagnetisch gesteuerte Kräfte aufgebracht wird, die den Ventilteller 28 zur Anlage (Verschluß des Teilventils) oder zum Abheben (Öffnung des Teilventils) bewegen. Bei der Darstellung der Fig. 4 ist das obere Teilventil 18a' für auf den Dämpfer einwirkende Zugkrafte und deren Dämpfung und das untere auf einwirkende Druckkräfte gerichtet. Die elektromagnetisch erzeugten Druck- oder Zug-Steuerkräfte werden hier hydraulisch verstärkt.

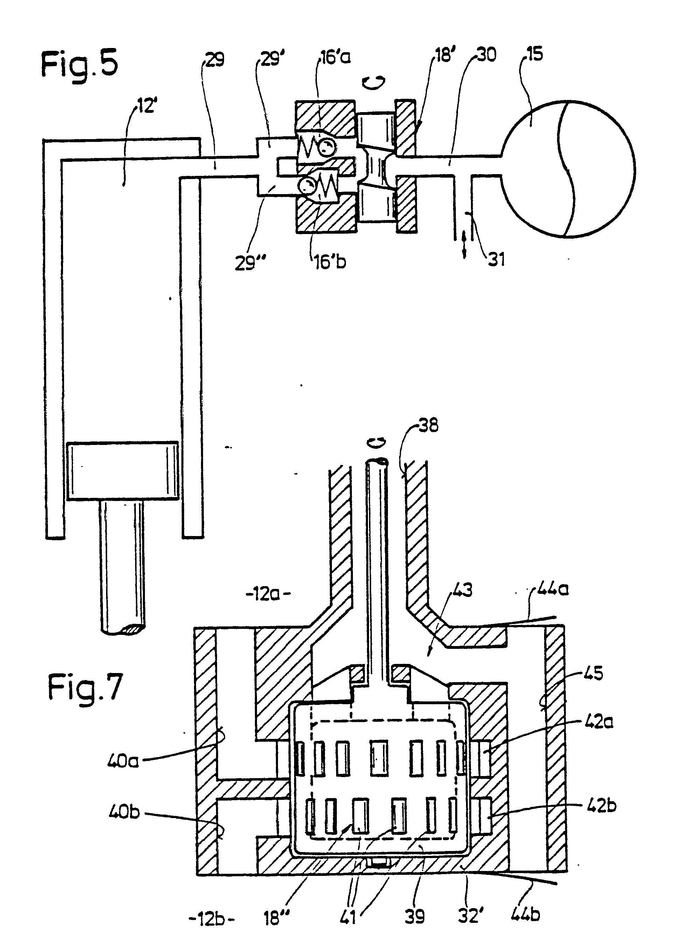

Das Ausführungsbeispiel der Fig. 5 stellt eine nur an eine Arbeitskammer 12' angeschlossene Druckmittel-Steuerungsmöglichkeit dar, wobei eine von der Arbeitskammer 12' ausgehende Druckleitung 29 sich in zwei Teilleitungen 29' und 29'' aufteilt, in die jeweils ein Rückschlagventil 16a', 16b' geschaltet ist, die in Reihe geschaltet sind mit einem Dämpferventil 18', welches bei gleicher Bezeichnung daher auch so aufgebaut ist, wie die alternative Ventilausbildung beim Ausführungsbeispiel der Fig. 3, mit dem gleichen Wirkungen. Die einzige, weiterführende Ventilanschlußleitung 30 ist mit dem hydropneumatischen Speicher oder Ausgleichsbehälter 15 verbunden; eine Zweigleitung 31 kann an eine nicht weiter dargestellte Last-Ausgleichseinrichtung (load leveler) angeschlossen sein.

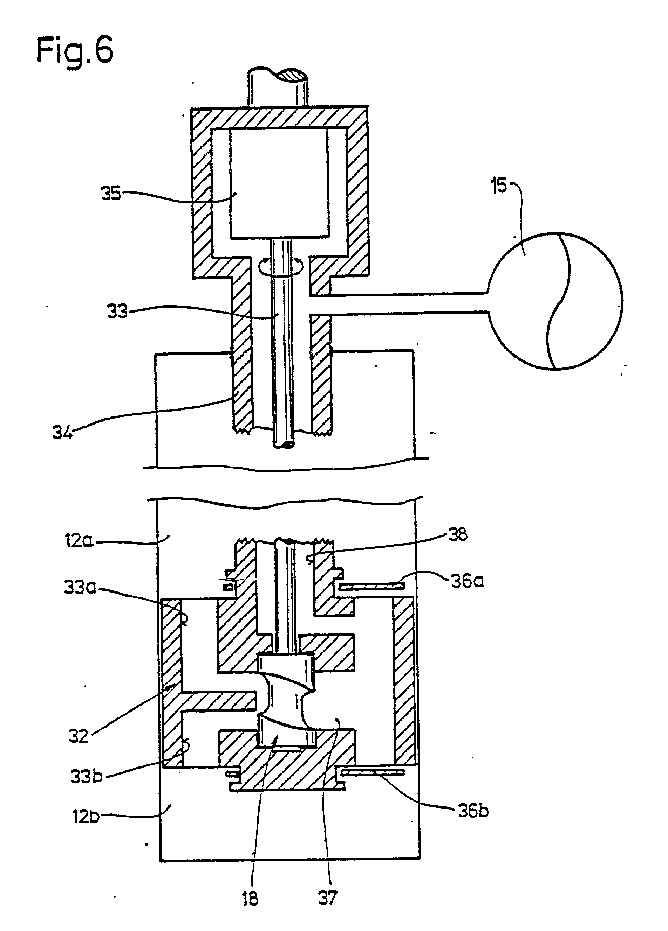

Die folgenden Ausführungsbeispiele der Figuren 6 und 7 unterscheiden sich von den bischer erläuterten Ausführungsbeispielen dadurch, daß der gesamte Ventilmechanismus (Rückschlagventile und variabel asymmetrisches Dämpferventil) im Kolben des Dämpfers angeordnet ist. Der Kolben ist mit 32 bezeichnet; er enthält beidseitige, sich in die Arbeitskammern 12a, 12b öffnende Durchlässe 33a, 33b, die zu einem Dämpferventil 18' führen, welches in seinem grundsätzlichen Aufbau und in seiner Wirkungsweise dem in Fig. 3 schon erläuterten Dämpferventil 18' mit Drehglied entspricht, wozu eine Steuerstange 33 vorgesehen ist, die Kolben und Kolbenstange 34 durchsetzt und zu einem Antriebsglied 35 geführt ist.

Die hier noch erfoderlichen Rückschlagventile sind als einfache Klappenventile mit 36a, 36b bezeichnet; sie verbinden den jeweils einen Dämpferventilabschluß 37 mit den beiden Arbeitskammer 12a, 12b und gleichzeitig über eine zunächst im Kolbenstangeninneren verlaufende Leitung 38 mit dem außenliegenden hydropneumatischen Speicher 15. Die grundsätzliche Wirkungsweise dieses Ausführungsbeispiels entspricht dem weiter vorn erläuterten; für jede Druckmittel-Flußrichtung muß immer jeweils ein Rückschlagventil und eines der Durchgänge des variabel asymmetrischen Dämpferventils 18' passiert werden, so daß sich auch hier die in den verschiedenen Diagrammverläufen dargestellten Dämpferkräfte ergeben.

Auch der in Fig. 7 dargestellte Ventilmechanismus entspricht nach grundsätzlichem Aufbau und Wirkungsweise dem Ventilmechanismus der Fig. 6, mit der Ausnahme, daß hier das Dämpferventil 18' zwar ebenfalls ein Drehventilglied 39 enthält, jedoch für niedrigen Druck bei gleichzeitig hohem Durchfluß ausgelegt ist. Die die jeweiligen Arbeitsräume 12a, 12b mit dem Dämpferventil verbindenden Leitungen sind mit 40a, 40b bezeichnet; sie münden jeweils in Ringausnehmungen in der Struktur des Kolbens 32'; diese Ringausnehmungen sind so ausgebildet, daß sie Fenster aufweisen, die, je nach der Winkelposition des Drehventilglieds 39 entweder auf fensterartige, über dem Umfang des beispielsweise topf- oder büchsenartig ausgebildeten Drehventils laufende Durchlaßöffnungen 41 gerichtet sind (Ventil geöffnet) oder gegenüber diesen Durchlaßöffnungen versetzt sind, so daß das Ventil, jedenfalls für diesen Anschlußbereich, gesperrt ist. Zur Realisierung des asymmetrischen Ventilverhaltens sind jetzt die auf die unterschiedlichen Ringausnehmungen 42a, 42b, im Kolben gerichteten Durchlaßfensterreihen im Drehventilglied 39 zueinander versetzt, was sich aus der Zeichnung bei Vergleich der oberen Fenster zu den unteren gut erkennen läßt. Das bedeutet, daß in den beiden Extremstellungen entweder dann nur die oberen Fenster zum Durchlaß des Druckmittels auf die entsprechenden Fenster in der Ringausnehmung gerichtet sind, oder die unteren oder natürlich jede denkbare Zwischenlösung möglich ist, so daß das variable asymmetrische Ventilverhalten sichergestellt ist. Die Rückschlagventile können einfach federnde Klappen 44a, 44b auf beiden Kolbenseiten sein, die einen gemeinsamen Seitenkanal 45 im Kolben, je nach der Kolbenbewegung, verschließen oder sich in diesen öffnen können, wobei dieser Kanal 45 mit den einen (gemeinsamen) Anschluß 43 des Dämpferventils 18'' in Verbindung steht; über eine zentrale Durchtrittsöffnung 38 in der Kolbenstange ist dann noch die Verbindung zu dem bei diesem Ausführungsbeispiel nicht dargestellten hydropneumatischen Speicher 15 vorgesehen.

## Patentansprüche

1. Vorrichtung zur Steuerung der Federhärte (Federsteifigkeit) bei zwei relativ zueinander und in ihren absoluten Positionen mit veränderbaren Geschwindigkeiten sich bewegender Körper oder Massen, insbesondere bei federnden Rad-Aufhängungssystemen in Fahrzeugen, Straßenfahrzeugen, Bussen, Bahnen u. dgl. wobei ein erster, an die Bewegung gekoppelter und sich daher in seinem Volumen verändernder Druckraum an einen weiteren Druckraum angeschlossen ist, dessen Volumen zur optimierenden Anpassung der Federsteifigkeit des Systems an die jeweiligen Last- und Bewegungsparameter kontinuierlich motorisch veränderbar ist, dadurch gekennzeichnet, daß ein Verbindungsventil (60, 60') zwischen den beiden Druckräumen (55; 62, 63; 55'; 62', 63') vorgesehen ist, das ein von einer zentralen Steuereinheit (71) in Abhängigkeit zu äußeren Last- und Bewegungsparametern gesteuertes schnelles, den Volumendurchfluß entweder sperrendes oder freigebendes Umschaltventil ist und daß zur Erzielung eines statischen Druckausgleichs zwischen den beiden von einem Kolben (63, 63') getrennten Kammern des als Kolben/Zylinderaggregats ausgebildeten zweiten Druckraums eine aus einem Abstand ($A_{23}$) zwischen Kolben und Zylinderwandung resultierende Lekkage gebildet ist.

2. Vorrichtung nach Anspruch 1, dadurch gekennzeichnet, daß der erste Druckraum (55, 55') ebenfalls aus einem Kolben/Zylinderaggregat mit einem Trennbalg (57) zur Ermöglichung einer Relativverschiebung zwischen Kolben (56) und Zylinder (60a) besteht.

3. Vorrichtung nach Anspruch 1 oder 2, dadurch gekennzeichnet, daß zur Volumenveränderung des zweiten Druckraums der Kolben (63, 63') des Kolben/Zylinderaggregats motorisch axial mittels eines selbsthemmenden Stellantriebs (64) verschiebbar ist.

4. Vorrichtung nach einem der Ansprüche 1 bis 3, dadurch gekennzeichnet, daß der ersten Druckkammer (55) ferner eine schnelle Niveauregulierung (70) zugeordnet ist.

5. Vorrichtung nach einem der Ansprüche 1 bis 4, dadurch gekennzeichnet, daß zusätzlich zum ersten Druckraum zwischen die beiden Körper eine asymmetrisch variable Dämpfung (69) geschaltet ist.

6. Vorrichtung nach Anspruch 4, dadurch gekennzeichnet, daß die Niveauregelung (70) über ein weiteres schnelles Umschaltventil (66) direkt mit der ersten Druckkammer (55) verbunden ist.

7. Vorrichtung nach einem der Ansprüche 4, 5 oder 6, dadurch gekennzeichnet, daß die Niveauregelung (70) mindestens zeitweise durch Beaufschlagung mit weiteren Last- und Bewegungsparametern als schnelle Druckregeleinrichtung zum Abfangen bestimmter Fahrzeugfahrzustände (Roll-, Wank- und Nickbewegungen) eingesetzt ist.

8. Vorrichtung nach einem der Ansprüche 1 bis 7, dadurch gekennzeichnet, daß bei Ausbildung als hydropneumatisches Federungssystem ein zusätzlicher, mindestens teilweise mit einem gasförmigen Medium gefüllter Druckausgleichsbehälter (74) vorgesehen und in die Verbindungsleitung zwischen den beiden Druckräumen geschaltet ist, wobei zwischen dem ersten Druckraum (55') und dem Anschluß des Druckausgleichsbehälters (74) ein Dämpferregelventil (73) angeordnet ist, bei Wegfall gesonderter Dämpfermittel (Fig. 2).

9. Vorrichtung nach Anspruch 8, dadurch gekennzeichnet, daß die Niveauregelung (70) an der gleichen Stelle in die Verbindungsleitung geschaltet ist wie der Anschluß des Druckausgleichsbehälters (74).

10. Vorrichtung nach einem der Ansprüche 1 bis 9, dadurch gekennzeichnet, daß die zentrale Steuereinheit (Mikroprozessor oder Mikrorechner 71) als Eingangssignale verschiedene Last- und Betriebs- sowie Bewegungsparameter zugeführt erhält und die Umschaltventile (60, 66), das Stellglied (64) für die Kolbenverschiebung der zweiten Druckkammer und die Niveauregelung (70) ansteuert.

11. Vorrichtung nach einem der Ansprüche 1 bis 10, dadurch gekennzeichnet, daß das Druckmittel ein gasförmiges Medium (Luft) ist.

12. Vorrichtung nach Anspruch 8, dadurch gekennzeichnet, daß das Dämpferregelventil (73) asymmetrisches Durchlaßverhalten aufweist und gegebenenfalls zusätzliche Rückschlagventile umfaßt zur Realisierung eines semiaktiven Dämpferverhaltens.

13. Vorrichtung nach einem der Ansprüche 3 bis 7, dadurch gekennzeichnet, daß zwischen Rad (59) und Fahrzeugaufbau (60) zusätzlich ein Dämpfer (69) mit asymmetrisch semiaktivem Dämpferverhalten geschaltet ist.

14. Vorrichtung nach Anspruch 13, dadurch gekennzeichnet, daß der Dämpfer (69) einen in einem Zylinder verschiebbaren, diesen in zwei Arbeitskammern unterteilenden Kolben aufweist und ein dem Fluß des Druckmittels aus der einen Arbeitskammer in die andere steuerndes Ventil vorgesehen und so ausgebildet ist, daß in mindestens einer Bewegungsrichtung (Zugstufe, Druckstufe) jeweils ein Rückschlagventil (16a, 16b; 16a', 16b'; 36a, 36b, 44a, 44b) mit dem Durchlaß eines durch Sensorsignale in seiner Position gesteuerten Dämpferventils (18, 18'; 18a', 18b'; 18'') in Reihe geschaltet ist und daß das Dämpferventil insgesamt so ausgelegt ist, daß sich für die in unterschiedlichen Richtungen wirkenden, aufgebrachten Dämpfungskräfte (Fd) unterschiedliche Durchflußwiderstände für das Druckmittel und damit asymmetrische Dämpfungseigenschaften für jeweils eine vorgegebene Position des Ventilstellglieds (21; 28; 39) ergeben, mit der Möglichkeit, daß das Ventilstellglied aus für jeweils Druck oder Zug maximalen Öffnungspositionen in beliebige Zwischenpositionen verfahrbar ist, derart, daß sich insgesamt bei Verzicht auf externe Energiezufuhr (im Grundsatz passives Dämpfersystem) ein semiaktives Dämpfersystem ergibt, bei welchem dort, wo Dämpfungskräfte mit im Vergleich zu der jeweils durch die Bewegungsabläufe erwünschten oder erforderlichen Dampfungskraft entgegengesetztem Vorzeichen ergeben, die Dämpfungskraft im wesentlichen zu Null gemacht wird (Fd=0).

15. Vorrichtung nach Anspruch 14, dadurch gekennzeichnet, daß die beiden Arbeitskammern (12a, 12b) über den Ausfluß des Druckmittels aus der zugeordneten Arbeitskammer sperrende Rückschlagventile (16a, 16b) miteinander und gleichzeitig mit einem hydropneumatischen Speicher (15, 15') verbunden sind, daß parallel zu jedem Rückschlagventil—und damit für eine vorgegebene Flußrichtung (Zug, Druck) mit dem jeweils anderen in Reihe liegend—, der Durchlaß des von Sensorsignalen in seiner Position gesteuerten Dämpferventils (18, 18', 18a', 18b') geschaltet ist, wobei die Ausbildung des Ventilglieds so ist, daß bei einer gesteuerten Ventilgliedbewegung die jeweiligen Durchflußrichtungen unterschiedlich, d.h. mit asymmetrischem Dämpfungsverhalten und im gegenläufigen Sinn in ihrem Öffnungsquerschnitt gesteuert sind.

16. Vorrichtung nach Anspruch 15, dadurch gekennzeichnet, daß das Dämpferventil (18, 18', 18a', 18b') ein Ventil mit drei Anschlüssen (23a, 23b; 19) ist, mit einem durch Ansteuerung axial verschiebbaren, zylindrischen Ventilglied (21) mit einer zentralen Ausnehmung (22) derart, daß die Axialverschiebung des Ventilglieds (21) die eine Durchflußrichtung in dem Maße schließt, wie die andere geöffnet wird.

17. Vorrichtung nach Anspruch 15, dadurch gekennzeichnet, daß das Dämpferventil (18') ein Drehventilglied (21') enthält, welches eine zentrale Ausnehmung mit schräg verlaufenden Begrenzungswänden enthält, derart, daß bei Drehung des Ventils durch entsprechende Sensorsignalansteurung die eine Durchlaßrichtung (Zug oder Druck) in dem Maße zunehmend geschlossen wird, wie die andere Durchlaßrichtung (Druck oder Zug) geöffnet wird.

18. Vorrichtung nach Anspruch 15, dadurch gekennzeichnet, daß jedem Rückschlagventil (16a, 16b) ein separates Ventilteil (18a', 18b') des Dämpferventils parallelgeschaltet ist, jeweils mit Tellerventilgliedern (28), die elektromagnetisch, entweder durch einfache Umschaltung oder kontinuerlich in entgegengesetztem Sinn in ihre Öffnungs- und Schließstellungen überführbar sind, wobei ein Ventilteil (18a') für die Zugstufe und das andere Ventilteil (18b') für die Druckstufe zuständig ist.

19. Vorrichtung nach einem der Ansprüche 14 bis 18, dadurch gekennzeichnet, daß der über die Rückschlagventile und/oder das variabel asymmetrische Dämpferventil mit den beiden Arbeitskammern (12a, 12b) verbundene hydropneumatische Speicher (15, 13) in einer Ringkammer (26) im Zylinder angeordnet ist (Fig. 4).

20. Vorrichtung nach einem der Ansprüche 14 bis 19, dadurch gekennzeichnet, daß lediglich eine Arbeitskammer (12') gebildet ist, die über eine sich in zwei Zweigleitungen (29', 29'') aufteilende Verbindungsleitung (29) jeweils mit antiparallel geschalteten Rückschlagventilen (16a', 16b') und weiterführend mit dem Dämpferventil (18') verbunden ist, dessen anderer Anschluß an den hydropneumatischen Speicher (15) angeschlossen ist (Fig. 5).

21. Vorrichtung nach Anspruch 20, dadurch gekennzeichnet, daß das Ventilglied des Dämpferventils (18') ein Drehventilglied ist.

22. Vorrichtung nach einem der Ansprüche 14 bis 21, dadurch gekennzeichnet, daß der die Rückschlagventile (36a, 36b; 44a, 44b) und das variabel asymmetrische Dämpferventil (18', 18'') bildende Ventilmechanimus im Kolben (32) angeordnet ist.

23. Vorrichtung nach Anspruch 22, dadurch gekennzeichnet, daß der Kolben (32) in einer zentralen, mit der oberen und der unteren Arbeitskammer (12a, 12b) verbundenen Bohrung ein variable asymmetrisches Dämpferventil (18') mit Drehventilglied aufnimmt, daß das Drehventilglied durch die hohle Kolbenstange von einer Steuerstange (33) betätigbar ist, daß der andere Dämpferventilanschluß (37) über Rückschlag-Klappenventile (36a, 36b) mit der oberen und der unteren Arbeitskammer (12a, 12b) verbunden ist, und daß die hohle Kolbenstange gleichzeitig den einen Dämpferventilanschluß (37) mit einem externen hydropneumatischen Speicher (15) verbindet (Fig. 6).

24. Vorrichtung nach einem der Ansprüche 14 bis 23, dadurch gekennzeichnet, daß zur Erzielung niedriger Druck- und hoher Flußverhältnisse das Ventilglied (29) im Kolben topfartig und zur beliebig asymmetrischen Durchflußwiderstandsbildung drehbar ausgebildet ist, mit aus einzelnen Durchlaßfenstern (41) in zwei Reihen gebildeten Öffnungen, die auf jeweils zugeordnete, mit der oberen und der unteren Arbeitskammer (12a, 12b) verbundene Durchtrittsöffnungen für das Druckmittel ausgerichtet sind, wobei die Öffnungen in den beiden Reihen zueinander um eine Schrittbreite versetzt sind zur asymmetrischen Durchflußvariation (Fig. 7).

## Revendications

1. Dispositif pour commander la dureté des ressorts (raideur des ressorts) pour deux corps ou masses se déplaçant, l'un par rapport à l'autre et en leurs positions absolues, avec des vitesses susceptibles d'être modifiées, notamment dans des systèmes de suspension élastiques de véhicules, véhicules routiers, autobus, véhicules ferroviaires, etc., dispositif dans lequel une première chambre de pression, couplée au déplaement et dont, en conséquence, le volume se modifie, est raccordée à une autre chambre de pression, dont le volume est susceptible d'être modifié de façon continue par un moteur, afin d'obtenir une adaptation optimale de la raideur des ressorts du système aux paramètres respectifs de charge et de déplacement, dispositif caractérisé en ce qu'il est prévu entre les deux chambres de pression (55; 62, 63; 55'; 62', 63') une vanne de liaison (60, 60') qui est une vanne rapide de commutation, commandée en fonction de paramètres externes de la charge et du déplacement par une unité centrale de commande (71), et qui arrête ou libère le débit volumétrique, tandis que pour obtenir un équilibre statique de pression entre les deux chambres, séparées par un piston 63, 63'), de la seconde chambre de pression réalisée sous la forme d'un ensemble piston-cylindre, une fuite, résultant d'un intervalle ($A_{23}$) entre le piston et la paroi du cylindre, est ménagée.

2. Dispositif selon la revendication 1, caractérisé en ce que la première chambre de pression (55, 55') est également constituée par un ensemble piston-cylindre, avec un soufflet de séparation (57) pour permettre un déplacement relatif entre le piston (56) et le cylindre (60a).

3. Dispositif selon la revendication 1 ou la revendication 2, caractérisé en ce que, pour modifier le volume de la seconde chambre de pression, le piston (63, 63') de l'ensemble piston-cylindre est susceptible d'accomplir un déplacement axial motorisé au moyen d'un servo-moteur auto-bloquant (64).

4. Dispositif selon une des revendications 1 à 3, caractérisé en ce qu'en outre, une régulation rapide du niveau (70) est associée à la première chambre de pression (55).

5. Dispositif selon une des revendications 1 à 4, caractérisé en ce qu'un amortissement asymétrique variable (69) est branché entre les deux corps, en supplément à la première chambre de pression.

6. Dispositif selon la revendication 4, caractérisé en ce que la régulation (70) du niveau est directement reliée à la première chambre de pression (55) par une autre vanne rapide de commutation (66).

7. Dispositif selon une des revendications 4, 5 ou 6, caractérisé en ce que la régulation (70) du niveau est mise en oeuvre, au moins de façon intermittente, en tant que dispositif de réglage rapide de la pression, en étant alimentée par d'autres paramètres de charge et de déplacement, pour capter certains états de marche du véhicule (mouvements de roulis et de tangage).

8. Dispositif selon une des revendications 1 à 7, caractérisé en ce que, lors de la réalisation sous forme de système élastique hydro-pneumatique, il est prévu un réservoir d'équilibrage de la pression (74), rempli au moins partiellement par un fluide gazeux, qui est branché sur la canalisation de liaison entre les deux chambres de pression, cependant qu'entre la première chambre de pression (55') et le raccordement du réservoir d'équilibrage de la pression (74) est disposée une vanne de réglage de l'amortissement (73), en cas de suppression d'un moyen distinct d'amortissement (figure 2).

9. Dispositif selon la revendication 8, caractérisé en ce que la régulation (70) du niveau est branchée sur la canalisation de liaison au même emplacement que le raccordement du réservoir (74) d'équilibrage de la pression.

10. Dispositif selon une des revendications 1 à 9, caractérisé en ce que l'unité centrale de commande (microprocesseur ou microcalculateur 71) reçoit comme signaux d'entrée, différents paramètres de charge et de fonctionnement ainsi que différents paramètres de déplacement qui lui sont appliqués, et les vannes de commutation (60, 66) commandent l'organe de réglage (64) pour le déplacement du piston de la deuxième chambre de pression et la régulation (70) du niveau.

11. Dispositif selon une des revendications 1 à 10, caractérisé en ce que le fluide sous pression est un fluide gazeux (air).

12. Dispositif selon la revendication 8, caractérisé en ce que la vanne (73) de réglage de l'amortisseur a un comportement de passage asymétrique et comprend éventuellement, des soupapes de retenue supplémentaires pour réaliser un comportement semi-actif de l'amortisseur.

13. Dispositif selon une des revendications 3 à 7, caractérisé en ce qu'un amortisseur (69) avec un comportement semi-actif asymétrique est branché, en outre, entre la roue (59) et la carrosserie (60) du véhicule.

14. Dispositif selon la revendication 13, caractérisé en ce que l'amortisseur (69) comporte un piston susceptible de se déplacer dans un cylindre, en subdivisant celui-ci en deux chambres de travail, tandis qu'il est prévu une vanne commandant le flux du fluide sous pression passant de l'une des chambres de travail dans l'autre, et qu'elle est prévue de façon qu'au moins dans un sens de déplacement (échelon de traction, échelon de compression) une soupape retenue (16a, 16b; 16a', 16b'; 36a, 36b; 44a, 44b) est branchée en série avec le passage d'une vanne d'amortisseur (18, 18'; 18a', 18b'; 18'') dont la position est commandée par des signaux de détecteurs, tandis que la vanne d'amortisseur est réalisée dans son ensemble de sorte que pour les efforts d'amortissement appliqués (Fd), agissant dans des sens différents, on ait des résistances à l'écoulement différentes pour le fluide sous pression et dont des propriétés d'amortissement asymétriques pour une position respective prédéfinie de l'organe de réglage (21; 28; 39) de la vanne, avec la possibilité que l'organe de réglage de la vanne soit susceptible d'être déplacé dans des positions intermédiaires quelconques, à partir de positions d'ouverture maximale pour la compression ou la traction, de sorte qu'en renonçant à un apport d'énergie externe (système d'amortisseur en principe passif) on aie au total un système d'amortisseur semi-actif, pour lequel, là où les efforts d'amortissement ont des signes opposés en comparaison de l'effort d'amortissement souhaité ou nécessaire, du fait de la succession des déplacements, l'effort d'amortissement soit essentiellement rendu nul (Fd=0).

15. Dispositif selon la revendication 14, caractérisé en ce que les deux chambres de travail (12a, 12b), par l'intermédiaire des soupapes de retenue (16a, 16b) arrêtant l'écoulement du fluide sous pression à partir de la chambre de travail associée, sont reliées ensemble et reliées en même temps à un accumulateur hydro-pneumatique (15, 15'), le passage de la vanne d'amortisseur (18, 18', 18a', 18b') dont la position est commandée par des signaux de détecteurs, étant branché en parallèle sur chaque soupape de retenue et se trouvant donc en série avec l'autre soupape pour un sens d'écoulement prédéfini (traction, compression), et la réalisation de l'organe de la vanne étant telle que pour un déplacement commandé de cet organe, les sens d'écoulement respectifs sont commandés de façon différente, c'est-à-dire avec un comportement d'amortissement asymétrique et en sens inverse en ce qui concerne leur section transversale de passage.

16. Dispositif selon la revendication 15, caractérisé en ce que la vanne d'amortisseur (18, 18'; 18a', 18b') est une vanne avec trois raccordements (23a, 23b, 19), avec un organe de vanne cylindrique (21), susceptible d'être déplacé axialement par une commande, et comportant un évidement central (22), de sorte que le déplacement axial de l'organe de vanne (21) ferme un des sens d'écoulement dans le mesure où l'autre est ouvert.

17. Dispositif selon la revendication 15, caractérisé en ce que la vanne d'amortisseur (18') comprend un organe de vanne tournant (21') qui comporte un évidement central avec des parois de délimitation s'étendant obliquement, de sorte que, lors de la rotation de la vanne commandée d'une façon appropriée par des signaux de détecteurs, l'un des sens de passage (traction ou compression) est progressivement fermé dans la mesure où l'autre sens de passage (compression ou traction) est ouvert.

18. Dispositif selon la revendication 15, caractérisé en ce qu'en parallèle à chaque soupape de retenue (16a, 16b) est branchée une partie distincte (18a', 18b') de la vanne d'amortisseur, avec respectivement des organes de soupapes à disques (28), qui sont susceptibles d'être amenés électromagnétiquement, soit par simple commutation, soit de façon continue, en sens opposé dans leurs positions d'ouverture et de fermeture, une partie de vanne (18a') étant valable pour l'échelon de traction et l'autre partie de vanne (18b') étant valable pour l'échelon de compression.

19. Dispositif selon une des revendications 14 à 18, caractérisé en ce que l'accumulateur hydropneumatique (15, 15') relié aux deux chambres de travail (12a, 12b) par l'intermédiaire des soupapes de retenue et/ou de la vanne asymétrique variable d'amortisseur, est disposé selon une chambre annulaire (26) dans le cylindre (figure 4).

20. Dispositif selon une des revendications 14 à 19, caractérisé en ce qu'il est seulement, prévu une chambre de travail (12') qui, par l'intermédiaire d'une canalisation de liaison (29) se divisant en deux canalisations dérivées (29', 29''), est respectivement reliée à des soupapes de retenue (16a', 16b') branchées en anti-parallèle et, au-delà, à la vanne d'amortisseur (18') dont l'autre raccordement est relié à l'accumulateur hydropneumatique (15) (figure 5).

21. Dispositif selon la revendication 20, caractérisé en ce que l'organe de vanne de la vanne d'amortisseur (18') est un organe de vanne tournant.

22. Dispositif selon une des revendications 14 à 21, caractérisé en ce que le mécanisme constituant les soupapes de retenue (36a, 36b; 44a, 44b) et la vanne asymétrique variable d'amortisseur (18', 18''), est disposé dans le piston (32).

23. Dispositif selon la revendication 22, caractérisé en ce que le piston (32) reçoit dans une alésage central, reliée à la chambre de travail supérieure et à la chambre de travail inférieure (12a, 12b), une vanne asymétrique variable d'amortisseur (18') avec une organe de vanne tournant, cet organe de vanne tournant étant susceptible d'être actionné par une tige de manoeuvre (33) passant à travers la tige creuse du piston, l'autre raccordement (37) de la soupape d'amortissement étant rélie, par l'intermédiaire de soupapes de retenue à clapet (36a, 36b) à la chambre supérieure et à la chambre inférieure (12a, 12b), tandis que la tige creuse du piston relie simultanément le raccordement (37) de la vanne d'amortisseur à un accumulateur hydro-pneumatique externe (15) (figure 6).

24. Dispositif selon une des revendications 14 à 23, caractérisé en ce que, pour obtenir des rapports de pression bas et des rapports de débit élevés, l'organe de vanne (39) dans le piston est réalisé en forme de pot, et de façon à pouvoir tourner pour établir une résistance à l'écoulement asymétrique à volonté, avec des ouvertures constituées sur deux rangées par des fenêtres individuelles de passage (41), et qui sont alignées sur des ouvertures, qui leur sont respectivement associées et qui sont reliées à la chambre de travail supérieure et à la chambre de travail inférieure afin de laisser passer le fluide sous pression, et les ouvertures dans les deux rangées étant décalées d'une largeur de pas les unes par rapport aux autres pour assurer une variation asymétrique du débit (figure 7).

## Claims

1. Device for controlling the spring hardness (spring stiffness) in two bodies or masses moving relative to one another, and in their absolute positions, with changeable speeds, in particular in spring-mounted wheel suspension systems in vehicles, road vehicles, buses, rail vehicles and the like, a first pressure chamber coupled to the motion and therefore of changeable volume being connected to a further pressure chamber, the volume of which can be continuously changed by motor operation for optimizing matching of the spring stiffness of the system to the respective load and motion parameters, characterized in that a connecting valve (60, 60') is provided between the two pressure chambers (55; 62, 63; 55'; 62', 63'), said connecting valve being a rapid switch-over valve controlled as a function of external load and motion parameters and either blocking or releasing the volume throughflow and in that, for achieving a static pressure compensation between the two chambers, separated by a piston (63, 63'), of the second pressure chamber constructed as a piston/cylinder assembly, a leakage is formed resulting from a spacing ($A_{23}$) between piston and cylinder walls.

2. Device according to Claim 1, characterized in that the first pressure chamber (55, 55') consists likewise of a piston/cylinder assembly with a separating bellows (57) for permitting a relative displacement between piston (56) and cylinder (60a).

3. Device according to Claim 1 or 2, characterized in that, for the purpose of changing the volume of the second pressure chamber, the piston (63, 63') of the piston/cylinder assembly is axially displaceable by motor operation by means of a self-locking actuating drive (64).

4. Device according to one of Claims 1 to 3, characterized in that in addition a rapid level control (70) is associated with the first pressure chamber (55).

5. Device according to one of Claims 1 to 4, characterized in that, in addition to the first pressure chamber, an asymmetrically variable damping means (69) is connected between the two bodies.

6. Device according to Claim 4, characterized in that the level control (70) is connected via a further rapid switch-over valve (66) directly to the first pressure chamber (55).

7. Device according to one of Claims 4, 5 or 6, characterized in that the level control (70) is used, by feeding it with further load and motion parameters, at least at times as a rapid pressure control device for intercepting certain vehicle driving states (rolling, wobbling and pitching motions).

8. Device according to one of Claims 1 to 7, characterized in that, with a construction as a hydropneumatic suspension system, an additional pressure compensating container (74) filled at least partially with a gaseous medium is provided and is connected into the connecting line between the two pressure chambers, a damper control valve (73) being arranged between the first pressure chamber (55') and the connection of the pressure compensating container (74), in the event of separate damping means (Fig. 2) being dispensed with.

9. Device according to Claim 8, characterized in that the level control (70) is connected into the connecting line at the same point as the connection of the pressure compensating container (74).

10. Device according to one of Claims 1 to 9, characterized in that the central control unit (microprocessor or microcomputer 71) is fed with various load, operating and motion parameters as input signals and actuates the switch-over valves (60, 66), the actuating member (64) for the piston displacement of the second pressure chamber and the level control (70).

11. Device according to one of Claims 1 to 10, characterized in that the pressure means is a gaseous medium (air).

12. Device according to Claim 8, characterized in that the damper control valve (73) has asymmetrical throughflow behaviour and if required comprises additional nonreturn valves for realizing a semi-active damper behaviour.

13. Device according to one of Claims 3 to 7, characterized in that in addition a damper (69) having asymmetrically semi-active damper behaviour is connected between wheel (59) and vehicle body (60).

14. Device according to Claim 13, characterized in that the damper (69) has a piston, which is displaceable in a cylinder and divides said cylinder into two working chambers, and a valve which controls the flow of the pressure means from the one working chamber into the other is provided and constructed in such a way that in at least one direction of movement (rebound travel, compression travel), in each case one nonreturn valve (16a, 16b; 16a', 16b'; 36a, 36b; 44a, 44b) is connected in series to the outlet of a damper valve (18, 18'; 18a'; 18b'; 18''), the position of which is controlled by sensor signals and in that the damper valve is designed as a whole in such a way that, different throughflow resistances for the applied damping forces (Fd) acting in different directions are obtained for the pressure means and thus asymmetrical damping properties are obtained for in each case one predetermined position of the valve actuating member (21; 28; 39), with the possibility that the valve actuating member can be moved from maximum opening positions for in each case compression or tension into any desired intermediate positions, in such a way that as a whole, with external energy supply being dispensed with, (passive damper system in principle) a semi-active damper system is obtained, in which at points where damping forces are obtained with opposite sign in comparison to the damping force desired or required in each case by the motions, the damping force is essentially set to zero (Fd=0).

15. Device according to Claim 14, characterized in that the two working chambers (12a, 12b) are connected to one another via the nonreturn valves (16a, 16b) blocking the outflow of the pressure means from the associated working chamber and are connected at the same time to a hydropneumatic reservoir (15, 15'), in that the outlet of the damper valve (18, 18', 18a', 18b'), the position of which is controlled by sensor signals, is connected in parallel to each nonreturn valve—and thus, for a predetermined flow direction (tension, compression), in series to the respective other valve—, the construction of the valve member being such that, with a controlled valve member movement, the respective throughflow direction are controlled differently, i.e. with asymmetrical damping behaviour and in the opposite direction in respect of their opening cross-section.

16. Device according to Claim 15, characterized in that the damper valve (18, 18'; 18a', 18b') is a valve with three connections (23a, 23b; 19), having a cylindrical valve member (21), which is axially displaceable by means of actuation, with a central recess (22) such that the axial displacement of the valve member (21) closes the one throughflow direction to the extent that the other is opened.

17. Device according to Claim 15, characterized in that the damper valve (18') contains a rotary valve member (21') which contains a central recess with obliquely running limiting walls, such that, on turning the valve by means of corresponding sensor signal actuation, the one throughflow direction (tension or compression) is increasingly closed to the degree that the other throughflow direction (compression or tension) is opened.

18. Device according to Claim 15, characterized in that a separate valve part (18a', 18b') of the damper valve is connected in parallel to each nonreturn valve (16a, 16b), in each case having disc valve members (28) which can be electromagnetically transferred into their opening and closing positions either by means of simple switching over or continuously in the opposite direction, a valve part (18a') being responsive for the rebound travel and the other valve part (18b') being responsible for the compression travel.

19. Device according to one of Claims 14 to 18, characterized in that the hydropneumatic reservoir (15, 15') connected via the nonreturn valves and/or the variable asymmetrical damper valve to the two working chambers (12a, 12b) is arrangd in an annular chamber (26) in the cylinder (Fig. 4).

20. Device according to one of Claims 14 to 19, characterized in that only one working chamber (12') is formed which is connected via connecting line (29) which divides up into two branch lines (29', 29''), in each case having nonreturn valves (16a', 16b') connected in an antiparallel manner and said chamber being connected further to the damper valve (18'), the other connection of which is connected to the hydropneumatic reservoir (15) (Fig. 5).

21. Device according to Claim 20, characterized in that the valve member of the damper valve (18') is a rotary valve member.

22. Device according to one of Claims 14 to 21, characterized in that the valve mechanism forming the nonreturn valves (36a, 36b; 44a, 44b) and the variable asymmetrical damper valve (18', 18'') is arranged in the piston (32).

23. Device according to Claim 22, characterized in that the piston (32) receives a variable asymmetrical damper valve (18') with rotary valve member in a central bore connected to the upper and to the lower working chamber (12a, 12b), in that the rotary valve member can be actuated through the hollow piston rod by a control rod (33), in that the other damper valve connection (37) is connected via nonreturn flap valves (36a, 36b) to the upper and to the lower working chamber (12a, 12b) and in that the hollow piston rod at the same time connects the one damper valve connection (37) to an external hydropneumatic reservoir (15), (Fig. 6).

24. Device according to one of Claims 14 to 23, characterized in that, in order to achieve lower pressure and higher flow ratios, the valve member (29) is rotatably constructed in the piston in a pot-like manner and for the formation of throughflow resistance in an asymmetrical a manner as desired, having openings formed from individual outlet windows (41) in two rows, said openings being aligned with in each case associated through-holes for the pressure means which are connected to the upper and to the lower working chamber (12a, 12b), said openings in the two rows being offset in relation to one another by one increment width for the purpose of asymmetrical throughflow variation (Fig. 7).

## Fig.1

EP 0 197 317 B1

Fig.2

Fig.3

# Fig.4

Fig.5

Fig.7

# Fig.6